# EUROPEAN PATENT APPLICATION

(11) **EP 3 668 061 A1**
(43) Date of publication of application: **17.06.2020**
(21) Application number: 19214404.6
(22) Date of filing: 09.12.2019
(51) Int. Cl.: H04L 29/08

(54) **STANDARDIZED HOT-PLUGGABLE TRANSCEIVING UNIT AND METHOD FOR IMPLEMENTING A MICRO-CACHING FUNCTIONALITY**

(30) Priority: 13.12.2018 US 201862778951 P; 29.01.2019 US 201916260252
(71) Applicant: Riedel Communications Canada Inc., Montréal, Québec H3B3V2 (CA)
(72) Inventor: LAVOIE, Renaud, Laval, Québec H7Y 2A7 (CA); BERTHIAUME, Sebastien, St-Eustache, Québec J7P 4R4 (CA)
(74) Representative: Roche, von Westernhagen & Ehresmann

(57) **Abstract**

Transceiving unit and method for implementing a micro-caching functionality. The transceiving unit comprises a housing adapted for insertion into a chassis of a hosting unit. Cached contents are stored in memory of the transceiving unit. The transceiving unit receives a request for a content and determines if the requested content belongs to the cached contents stored in the memory. If the determination is positive, the requested content is retrieved from the memory and transmitted by the transceiving unit. If the determination is negative, the request for the content is forwarded by the transceiving unit. A determination is made that given content(s) stored in the memory shall no longer be cached. A determination is also made that a requested content shall be cached in the memory. For instance, the transceiving unit is a standardized hot-pluggable transceiving unit such as an SFP unit.

## Description

### TECHNICAL FIELD

The present disclosure relates to the field of standardized hot-pluggable transceiving units. More specifically, the present disclosure relates to a standardized hot-pluggable transceiving unit and a method for implementing a micro-caching functionality.

### BACKGROUND

Small Form-factor Pluggable (SFP) units represent one example of standardized hot-pluggable transceiving units. SFP units are standardized units adapted to be inserted within a chassis of a hosting unit. A suite of specifications, produced by the SFF (Small Form Factor) Committee, describe the size of the SFP unit, so as to ensure that all SFP compliant units may be inserted smoothly within one same chassis, i.e. inside cages, ganged cages, superposed cages and belly-to-belly cages. Specifications for SFP units are available at the SFF Committee website.

SFP units may be used with various types of exterior connectors, such as coaxial connectors, optical connectors, RJ45 connectors and various other types of electrical connectors. In general, an SFP unit allows connection between an external apparatus, via a front connector of one of the aforementioned types, and internal components of a hosting unit, for example a motherboard, a card or a backplane leading to further components, via a back interface of the SFP unit. Specification no INF-8074i Rev 1.0, entitled "SFP (Small Form-factor Pluggable) Transceiver, dated May 12, 2001, generally describes sizes, mechanical interfaces, electrical interfaces and identification of SFP units.

The SFF Committee also produced specification no SFF-8431 Rev. 4.1, "Enhanced Small Form-factor Pluggable Module SFP+", dated July 6, 2010. This document, which reflects an evolution of the INF-8074i specification, defines, *inter alia,* high speed electrical interface specifications for 10 Gigabit per second SFP+ modules and hosts, and testing procedures. The term "SFP+" designates an evolution of SFP specifications.

INF-8074i and SFF-8431 do not generally address internal features and functions of SFP devices. In terms of internal features, they simply define identification information to describe SFP devices' capabilities, supported interfaces, manufacturer, and the like. As a result, conventional SFP devices merely provide connection means between external apparatuses and components of a hosting unit, the hosting unit in turn exchanging signals with external apparatuses via SFP devices.

Recently, SFP units with internal features and functions providing signal processing capabilities have appeared. For instance, some SFP units now include signal re-clocking, signal reshaping or reconditioning, signals combination or separation, signal monitoring, etc. Furthermore, some SFP units now include content processing capabilities, for processing the content transported by the signals received by the SFP units.

In the field of video transport, advances have been made recently for generalizing the transport of video content into Internet Protocol (IP) packets. Consequently, the amount of video content transported via the IP protocols suite over the Internet infrastructure has exploded. The capacity of the Internet infrastructure is constantly upgraded to cope with the constant increase in traffic, in particular video traffic. One complementary solution for supporting the increase in video traffic consists in deploying caching servers close to the destination of the video traffic. With a caching server, the upstream Internet infrastructure is not affected by the demand for the cached content. Caching servers can be adapted for caching any type of content, and are not limited to the caching of video content.

However, such caching servers have several drawbacks. One of them is that the caching is static or quasi-static, and is not capable of dynamically adapting to the content that is most in demand at a given moment. Another drawback is that the caching servers are dedicated equipment, and legacy equipment of the Internet infrastructure (e.g. switches or routers) cannot be easily adapted to support a caching functionality.

Therefore, there is a need for a standardized hot-pluggable transceiving unit and a method for implementing a micro-caching functionality.

### SUMMARY

According to a first aspect, the present disclosure provides a transceiving unit. The transceiving unit comprises a housing adapted to being inserted into a port of a hosting unit. The transceiving unit comprises memory in the housing for storing cached contents. The transceiving unit further comprises at least one connector, and a processing unit in the housing. The processing unit receives a request for a content via the at least one connector. The processing unit determines if the requested content belongs to the cached contents stored in the memory. If the determination is positive, the processing unit retrieves the requested content from the memory and transmits the requested content via the at least one connector. If the determination is negative, the processing unit forwards the request for the content via the at least one connector. The processing unit also determines that at least some of the cached contents stored in the memory shall no longer be cached and deletes the at least some of the cached contents from the memory.

According to a second aspect, the present disclosure provides a method for implementing a micro-caching functionality by a transceiving unit. The transceiving unit comprises a housing adapted to being inserted into a chassis of a hosting unit. The method comprises storing cached contents in memory of the transceiving unit. The method comprises receiving, by a processing unit of the transceiving unit, a request for a content via a connector of the transceiving unit. The method comprises determining, by the processing unit, if the requested content belongs to the cached contents stored in the memory. If the determination is positive, the method comprises retrieving by the processing unit the requested content from the memory and transmitting by the processing unit the requested content via the connector or another connector of the transceiving unit. If the determination is negative, the method comprises forwarding by the processing unit the request for the content via the connector or another connector of the transceiving unit. The method also comprises determining, by the processing unit, that at least some of the cached contents stored in the memory shall no longer be cached and deleting, by the processing unit, the at least some of the cached contents from the memory.

According to a third aspect, the present disclosure provides a non-transitory computer program product comprising instructions executable by a processing unit of a transceiving unit. The transceiving unit comprises a housing adapted to being inserted into a chassis of a hosting unit. The execution of the instructions by the processing unit of the transceiving unit provides for implementing a micro-caching functionality, by performing the aforementioned method.

In a particular aspect, the transceiving unit is a standardized hot-pluggable transceiving unit and the housing has standardized dimensions.

In another particular aspect, a determination is made that a given content shall be cached in the memory of the transceiving unit.

### BRIEF DESCRIPTION OF THE DRAWINGS

Embodiments of the disclosure will be described by way of example only with reference to the accompanying drawings, in which:
Figure 1 is a top view of an SFP unit;
Figure 2 is a side elevation view of the SFP unit of Figure 1;
Figure 3 is a front elevation view of the SFP unit of Figure 1;
Figure 4 is back elevation view of the SFP unit of Figure 1;
Figure 5 is a bottom view of the SFP unit of Figure 1;
Figure 6 is a perspective view of the SFP unit of Figure 1;
Figure 7 represents a traditional architecture for implementing a caching functionality;
Figures 8A, 8B, 9A, 9B, 10A, 10B and 10C represent an SFP unit implementing a micro-caching functionality;
Figures 11A, 11B, 12A, 12B, 13A, 13B and 13C represent a hosting unit for inserting the SFP unit represented in Figures 8A, 8B, 9A, 9B, 10A, 10B and 10C; and
Figures 14A, 14B and 14C represent a method for implementing a micro-caching functionality by the SFP unit represented in Figures 8A, 8B, 9A, 9B, 10A, 10B and 10C.

### DETAILED DESCRIPTION

The foregoing and other features will become more apparent upon reading of the following non-restrictive description of illustrative embodiments thereof, given by way of example only with reference to the accompanying drawings.

The present disclosure describes standardized hot-pluggable transceiving units, such as Small Form-factor Pluggable (SFP) /SFP+ units, having internal features that far exceed those of conventional units. Conventional units merely provide connection capabilities between a hosting unit in which they are inserted and external apparatuses. The standardized hot-pluggable transceiving unit disclosed herein provides the capability of micro-caching content in a memory of the transceiving unit.

The following terminology is used throughout the present disclosure:
- SFP:: Small Form-factor Pluggable, this term refers to units that are insertable into a chassis of a hosting unit; in the present disclosure, an SFP unit complies with an industry standard specification.
- Connector:: A device component for physically joining circuits carrying electrical, optical, radio-frequency, or like signals.
- Content:: Any type of data which can be transported over a telecommunication infrastructure. Examples of content include: video, audio, images, text, web site pages, data generated by a computer program, data stored in a cloud infrastructure, etc.
- Micro-caching:: Caching of a content for a limited period of time. The caching begins when a particular event / condition / etc. occurs. Similarly, the caching stops when another particular event / condition / etc. occurs.

### STANDARDIZED HOT-PLUGGABLE TRANSCEIVING UNIT WITH CONVENTIONAL CAPABILITIES

In the rest of the disclosure, an SFP unit is used to illustrate an example of a standardized hot-pluggable transceiving unit. However, the teachings of the present disclosure are not limited to an SFP unit; but can be applied to any type of standardized hot-pluggable transceiving unit.

An SFP unit comprises a housing having a front panel, a back panel, a top, a bottom and two sides. Generally, the front panel includes at least one connector for connecting a cable, a fiber, twisted pairs, etc. The back panel includes at least one rear connector for connecting to a hosting unit. However, some SFP units may have no front connector, or alternatively no rear connector. The SFP unit may be fully-compliant or partially compliant with standardized SFP dimensions, such as SFP, SFP+, XFP (SFP with 10 Gigabit/s data rate), Xenpak, QSFP (Quad (4-channel) SFP with 4x10 Gigabit/s data rate), QSFP+, CFP (C form-factor pluggable with 100 Gigabit/s data rate), CPAK, SFP28 (SFP with 25 Gigabit/s data rate), SFP56 (SFP with 50 Gigabit/s data rate) or any other standardized Small Form-factor Pluggable unit.

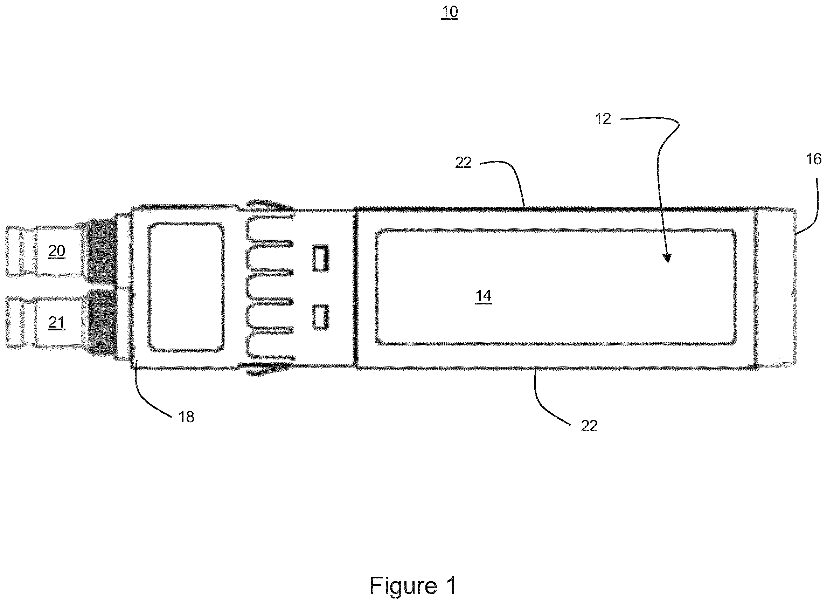

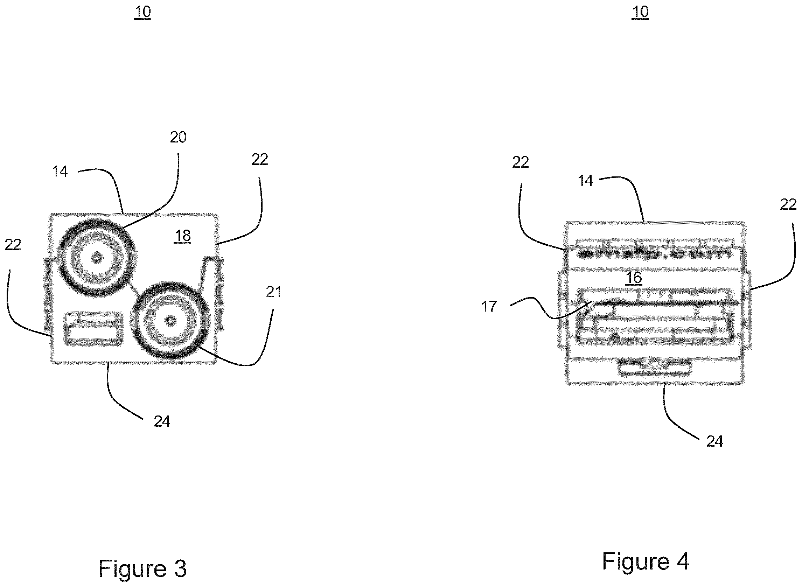

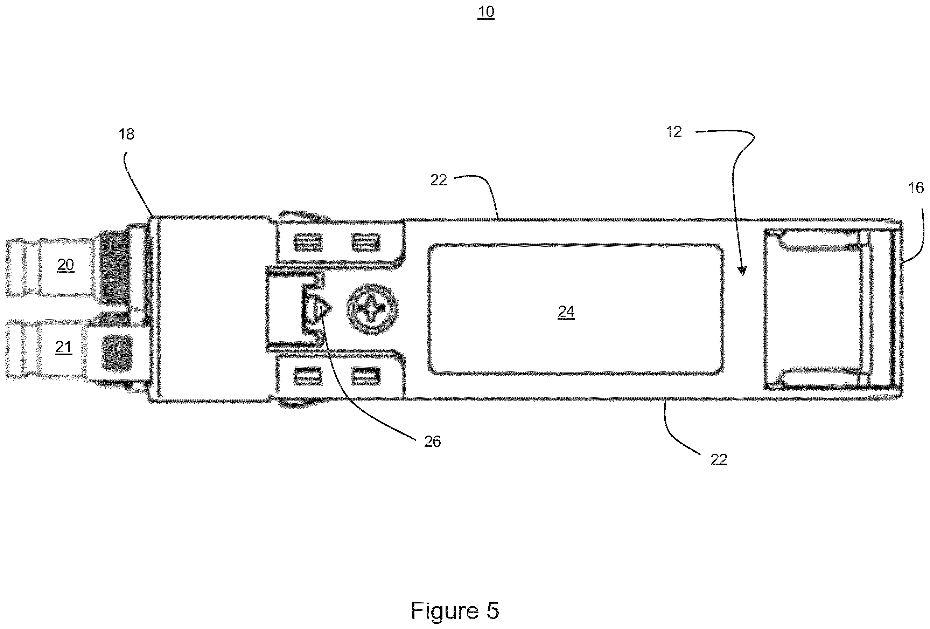

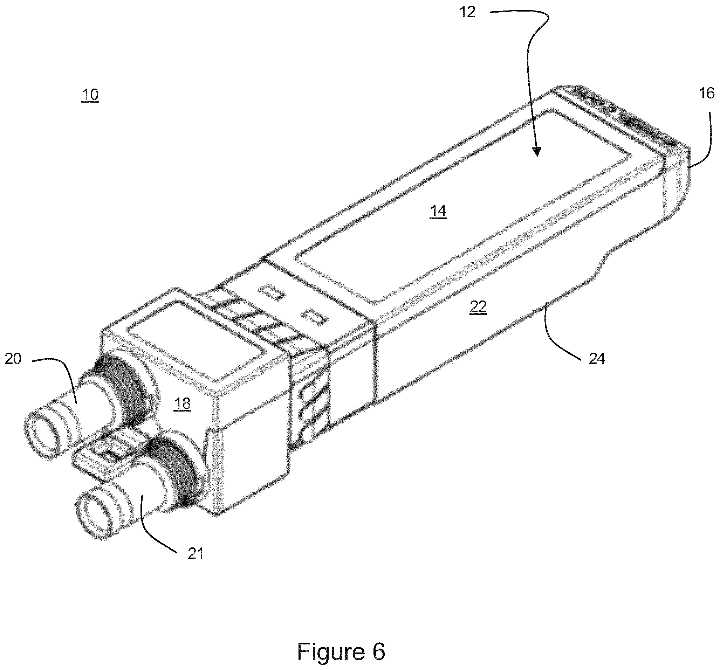

Reference is now made concurrently to Figures 1-6, which are, respectively, a top view, a side elevation view, a front elevation view, a back elevation view, a bottom view and a perspective view of an SFP unit 10. The SFP unit 10 comprises a housing 12. The housing defines a top 14, a bottom 24, and two sides 22. The housing 12 is at least partially of dimensions in compliance with at least one of the following standards: SFP, SFP+, XFP, Xenpak, QSFP, QSFP+, CFP, CPAK, SFP28, SFP56, etc. Alternatively, the housing 12 has functional dimensions based on at least one of the following standards: SFP, SFP+, XFP, Xenpak, QSFP, QSFP+, CFP, CPAK, SFP28, SFP56, etc.

The SFP unit 10 further comprises a back panel 16 affixed to the housing 12. The back panel 16 comprises a rear connector 17, for instance an electrical or an optical connector. In an example, the back panel 16 comprises the rear connector 17 (also named a host connector) suitable to connect the SFP unit 10 to a backplane of a chassis (not shown for clarity purposes) of a hosting unit, as known to those skilled in the art. More specifically, the connection is performed via a port of the hosting unit adapted for insertion of the SFP unit 10 and connection of the rear connector 17 to the backplane of the hosting unit.

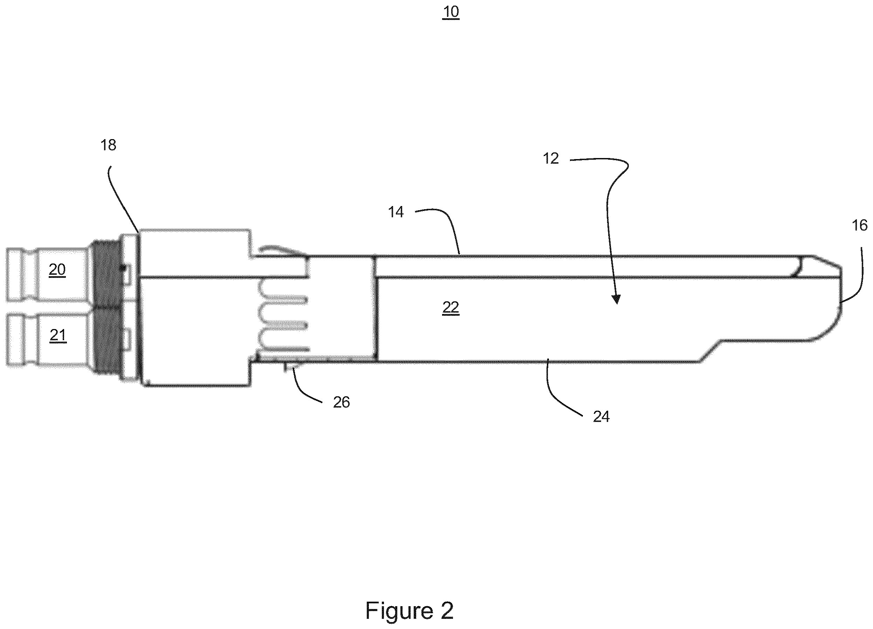

The SFP unit 10 further comprises a front panel 18 affixed to the housing 12. The front panel 18 comprises one or more connectors, for example a connector 20 of a co-axial cable type, adapted to send and/or receive video IP flows and a connector 21, also of the co-axial cable type, also adapted to send and/or receive video IP flows. The SFP unit 10 further comprises an engagement mechanism, such as for example a latch 26 as shown in a resting position on the bottom 24 in Figure 2, for maintaining the SFP unit 10 in place within a chassis.

### STANDARD CACHING FUNCTIONALITY

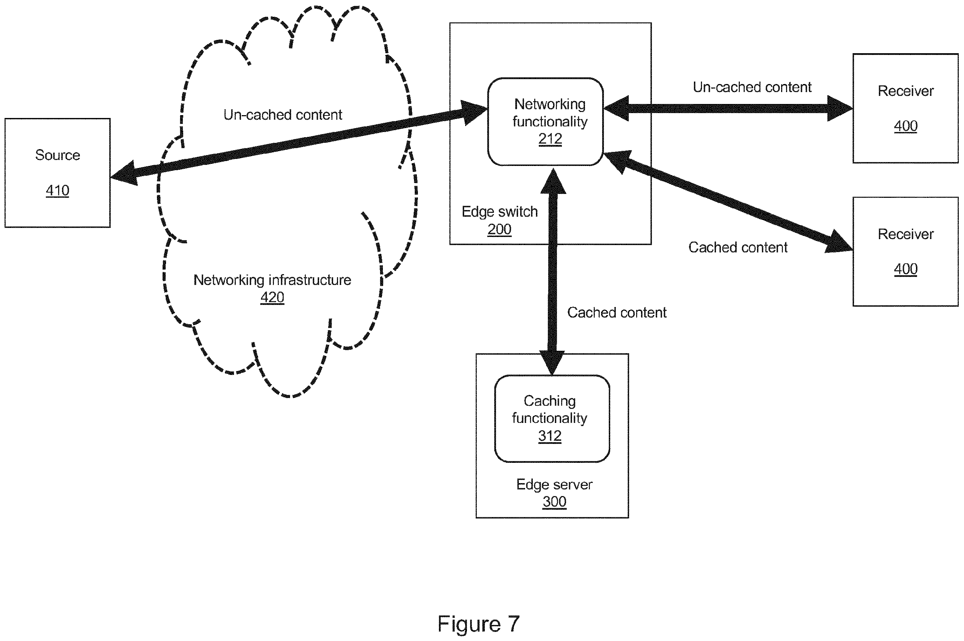

Referring now to Figure 7, a content delivery infrastructure implementing a standard caching functionality is represented. The content delivery infrastructure includes an edge communication equipment, such as the edge switch 200 represented in Figure 7. The edge switch 200 is close (from a networking topology perspective) to receivers 400. The content delivery infrastructure also includes an edge server 300 close (from a networking topology perspective) to the edge switch 200. The edge server 300 implements a caching functionality 312 for caching content.

The edge switch 200 implements a networking functionality 212. The networking functionality 212 forwards a request for an un-cached content generated by a receiver 400 to a source 410 (where the requested un-cached content is stored / generated) via a networking infrastructure 420. The networking functionality 212 forwards the requested un-cached content received from the source 410 via the networking infrastructure 420 to the receiver 400. The requested un-content is not cached by the caching functionality of the edge server 300.

The networking functionality 212 of the edge switch 200 forwards a request for a cached content generated by a receiver 400 to the edge server 300 (where the requested cached content is stored by the caching functionality 312). The networking functionality 212 forwards the requested cached content received from the edge server 300 to the receiver 400.

The networking infrastructure 420 generally includes a plurality of networking equipment (e.g. core router(s), edge router(s), switch(es), etc.) between the edge switch 200 and the source 410. The plurality of networking equipment is not represented in Figure 7 for simplification purposes. By contrast, the edge switch 200 is directly connected to the edge server 300, or at least through a low number of networking equipment. In some implementations, the functionalities of the edge switch 200 and the edge server 300 are integrated in a single equipment.

The receivers 400 are generally far from the sources 410 from a topological and / or physical perspective. By contrast, the edge server 300 is close to the receivers 400 from a topological and / or physical perspective. Thus, the caching functionality 312 implemented by the edge server 300 allows to save bandwidth in the networking infrastructure 420. The time required for delivering the cached content is also generally lower to the time required for delivering the un-cached content (the networking infrastructure 420 may introduce significant delays).

The content delivery infrastructure represented in Figure 7 is for illustration purposes only. Content delivery infrastructures including a caching functionality 312 may be implemented differently. The underlying networking protocols used for implementing such content delivery infrastructures belong to the Internet Protocol (IP) family. In particular, the networking infrastructure 420 is generally an IP networking infrastructure. The equipment at the edge (e.g. sources 410 and receivers 400) generally also use IP networking, but may also use other networking protocols.

The source 410 is any type of equipment capable of generating and / or storing content, which is delivered to the receiver 400, and optionally cached by the edge server 300. The receiver 400 is any type of equipment capable of processing the received cached or un-cached content. For instance, when the content consists of video content, examples of video sources 410 include professional video recorders for the film industry, security cameras, television broadcasting equipment, video streaming servers, etc. Examples of video receivers 400 include a personal equipment with a screen for displaying the video content, a professional equipment such as a multiviewer, etc.

The content delivery infrastructure represented in Figure 7 is typical for large content providers, who own large centralized servers (e.g. the sources 410 in Figure 7) for storing their content. The large content providers also own a plurality of caching servers (e.g. the server 300 in Figure 7) localized in various geographical areas, where at least some of the content of the large centralized servers is duplicated via caching functionalities 312.

One drawback of such content delivery infrastructures is that the caching functionality 312 is not capable of dynamically adjusting to the demand for a given content (cache the given content if it is in high demand and do not cache the given content if it is not in high demand). Furthermore, deploying dedicated edge caching servers 300 is costly in terms of networking and computing resources; particularly when the caching functionality 312 is not dynamically adjustable, resulting in a potentially significant waste or computing resources.

The present disclosure aims at providing a micro-caching functionality which can be easily integrated in various types of equipment. For this purpose, the micro-caching functionality is implemented by an SFP unit, which can be inserted into a chassis of a hosting unit, such as the edge switch 200. This is a cost effective solution for integrating a micro-caching functionality to the edge switch 200. Alternatively, software and possibly hardware components of the edge switch 200 would need to be updated (e.g. add memory to the edge switch 200 and upgrade its software with a micro-caching functionality).

### SFP UNIT IMPLEMENTING A MICRO-CACHING FUNCTIONALITY

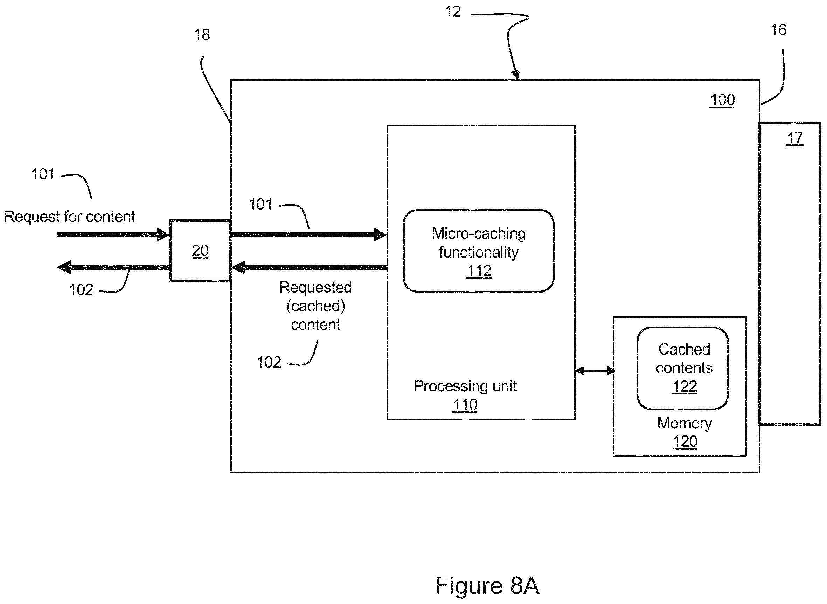

Referring now concurrently to Figures 8A, 8B, 9A, 9B, 10A, 10B, 10C, 11A, 11B, 12A, 12B, 13A, 13B, 13C, 14A, 14B and 14C, an SFP unit 100 and a method 500 are represented. The SFP unit 100 is adapted for being inserted into a port of a hosting unit (e.g. the edge switch 200 of Figure 7). The SFP unit 100 corresponds to the SFP unit 10 represented in Figures 1 to 6, and comprises the housing 12, the back panel 16 and the front panel 18.

The SFP unit 100 comprises at least one connector for receiving and transmitting signals, each signal transporting one or more flow of data. For example, the flow of data consists of an IP flow transporting a data content (e.g. a video content).

An IP flow is well known in the art. It consists of a sequence of IP packets from a source (e.g. a video source generating a video IP flow) to a destination (e.g. a video receiver displaying videos based on the video IP flow). Several protocol layers are involved in the transport of the IP packets of the IP flow, including a physical layer (e.g. optical or electrical), a link layer (e.g. Media Access Control (MAC) for Ethernet), a network layer (e.g. IPv4 or IPv6), a transport layer (e.g. User Datagram Protocol (UDP)), and one or more application layers ultimately embedding an application payload (e.g. a video payload, an audio payload, a metadata payload, etc.). The IP flow provides end-to-end delivery of the application payload over an IP networking infrastructure.

The at least one connector of the SFP unit 100 includes the rear connector 17 located on the back panel 16 of the housing 12 of the SFP unit 100. Optionally, the SFP unit 100 also includes one or more front connector (e.g. front connector 20) located on the front panel 18 of the housing 12.

At least one of the front connectors may not be adapted for receiving signals transporting IP flows. For example, one or more front connector (e.g. 20) is a Serial Digital Interface (SDI) connector adapted for receiving SDI signals transporting SDI video payloads. Other types of front connectors, such as a High-Definition Multimedia Interface (HDMI) video connector for receiving a HDMI signals transporting HDMI video payloads, may be used as well.

The SFP unit 100 comprises a processing unit 110 (in the housing 12) implementing a micro-caching functionality 112. The micro-caching functionality 112 is implemented by a software executed by the processing unit 110. Alternatively, the micro-caching functionality 112 is implemented by dedicated hardware component(s) of the processing unit 110 (e.g. one or several Field-Programmable Gate Array (FPGA)). The processing unit 110 may implement additional functionalities not represented in the Figures for simplification purposes.

The SFP unit 100 comprises memory 120 in the housing 12. The memory 120 stores instructions of the computer program(s) executed by the processing unit 110, data generated by the execution of the computer program(s), data received via the connector(s), etc. Only a single memory 120 is represented in the Figures, but the SFP unit 100 may comprise several types of memories, including volatile memory (such as a volatile Random Access Memory (RAM), etc.) and nonvolatile memory (such as electrically-erasable programmable read-only memory (EEPROM), etc.). Contents 122 cached by the SFP unit 100 are stored in the memory 120.

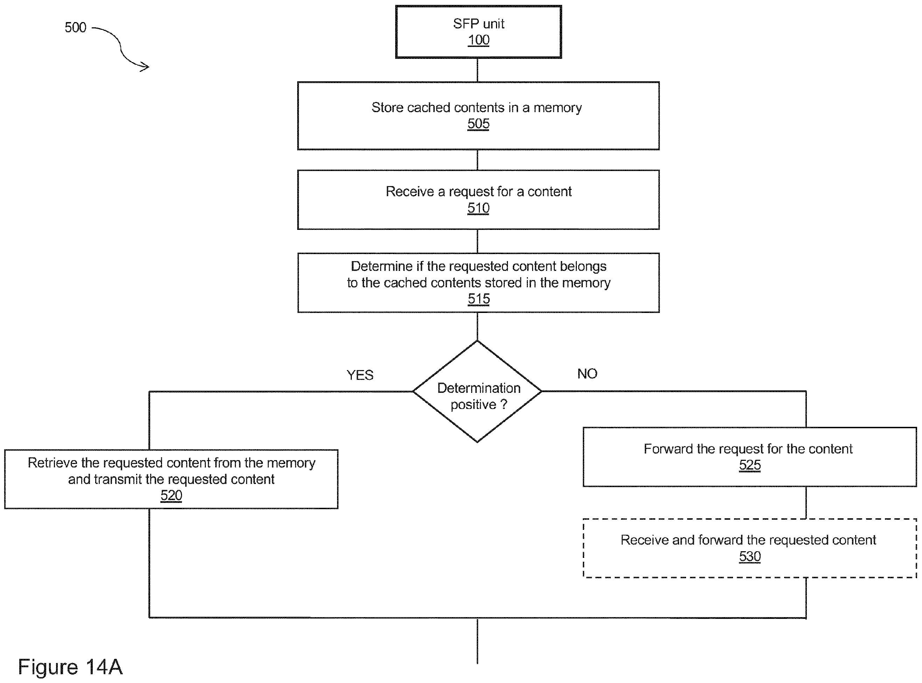

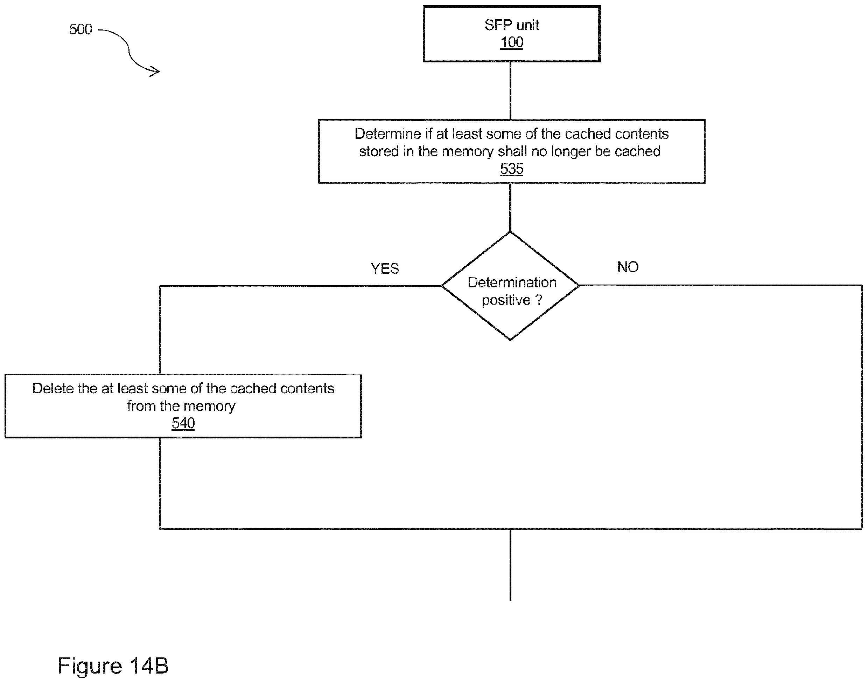

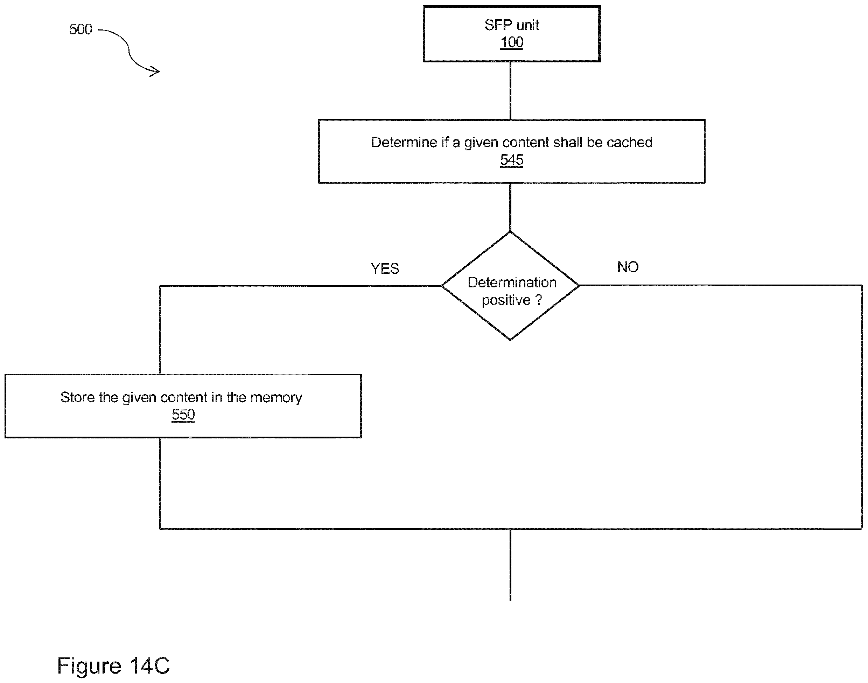

Referring now more particularly to Figures 14A, 14B and 14C, a method 500 for implementing the micro-caching functionality 112 is represented. The steps of the method 500 are executed by the processing unit 110 of the SFP unit 100.

A dedicated computer program has instructions for implementing the steps of the method 500 executed by the processing unit 110 of the SFP unit 100. The instructions are comprised in a non-transitory computer program product (e.g. the memory 120) of the SFP unit 100. The instructions, when executed by the processing unit 110 of the SFP unit 100, provide for implementing the micro-caching functionality 112. The instructions are deliverable to the SFP unit 100 via a communication network through one of the connectors (e.g. 17 or 20) of the SFP unit 100.

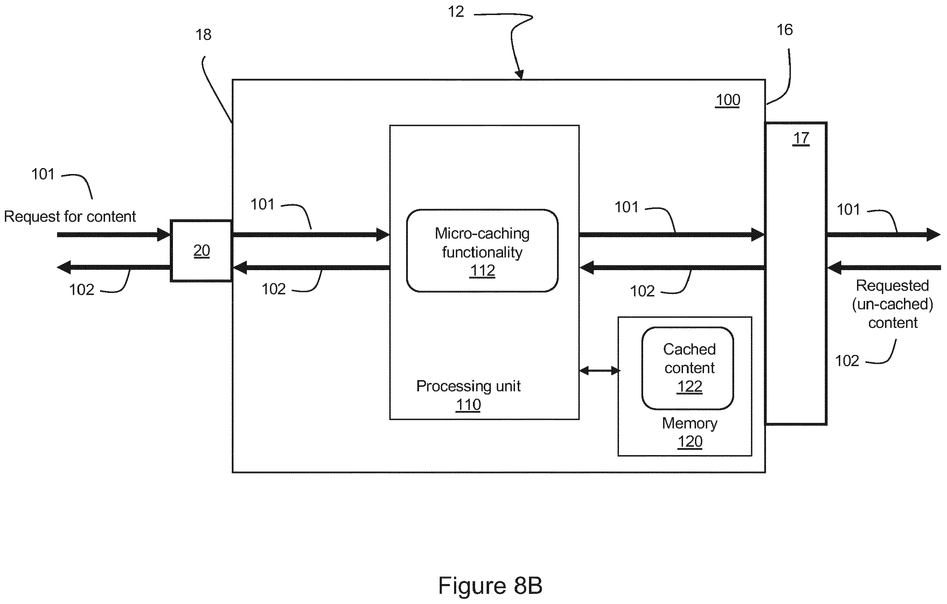

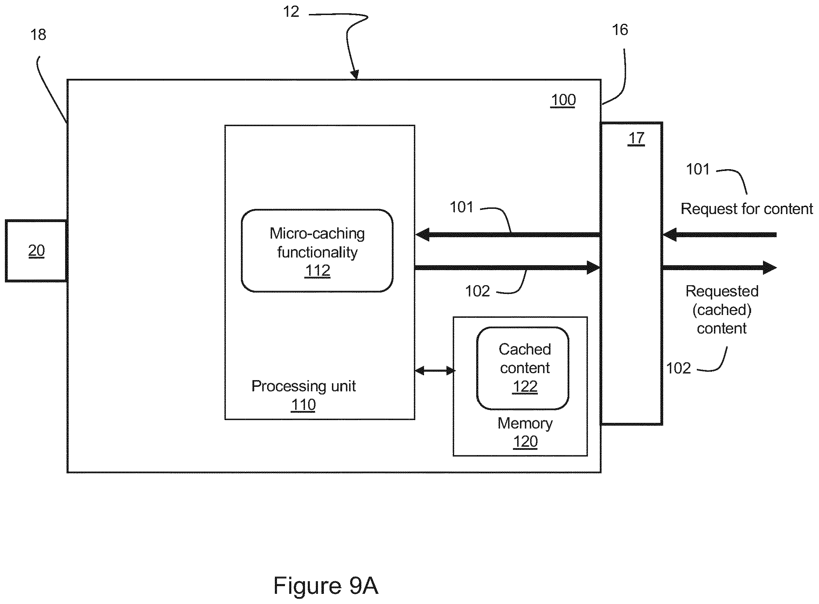

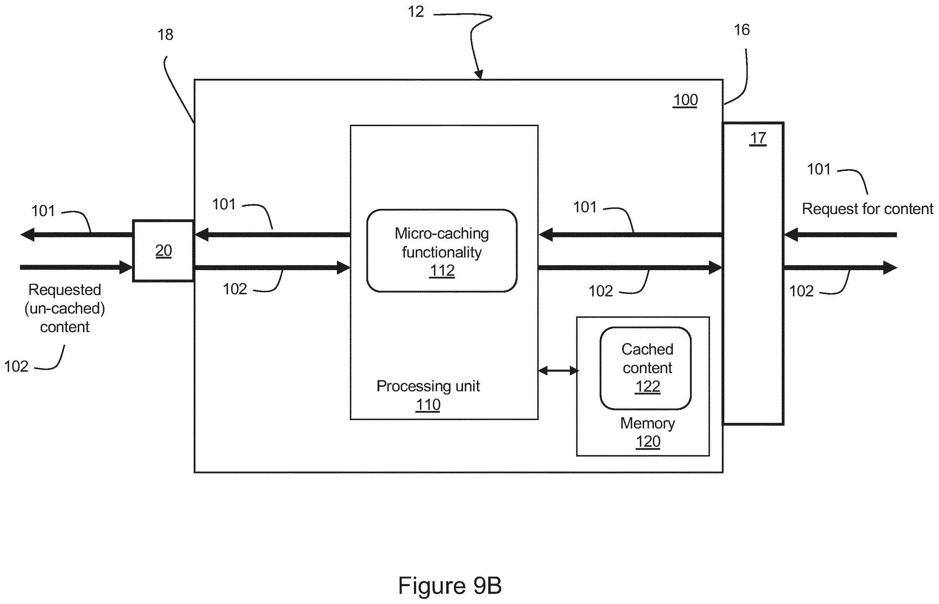

Figures 8A, 8B, 9A and 9B illustrate implementations of the SFP unit 100 with the rear connector 17 and at least one front connector 20. The data received and transmitted by the SFP unit 100, when performing the method 500, are exchanged via these rear connector 17 and at least one front connector 20. Although a single front connector 20 is represented, other implementations of the SFP unit 100 may include more than one front connect (e.g. a second front connector 21 as illustrated in Figures 1-6, four front connectors of a Quad SFP, etc.) for exchanging the data.

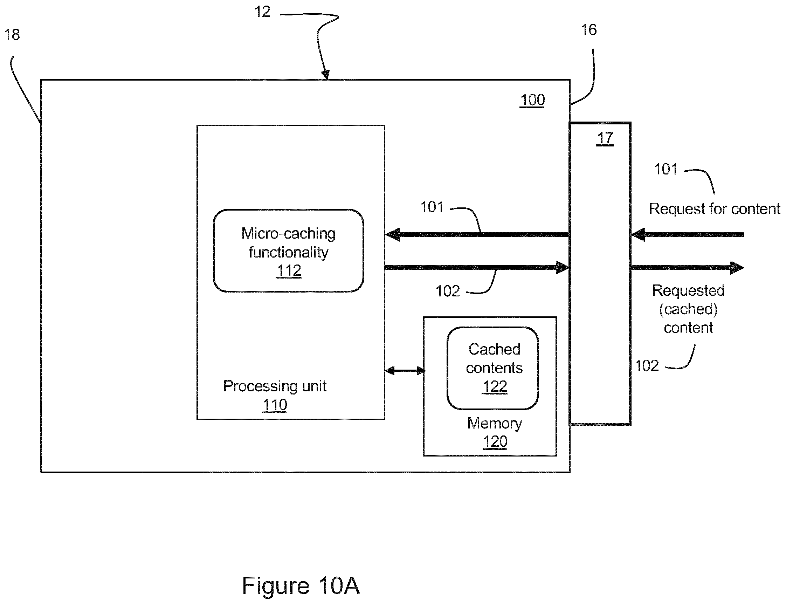

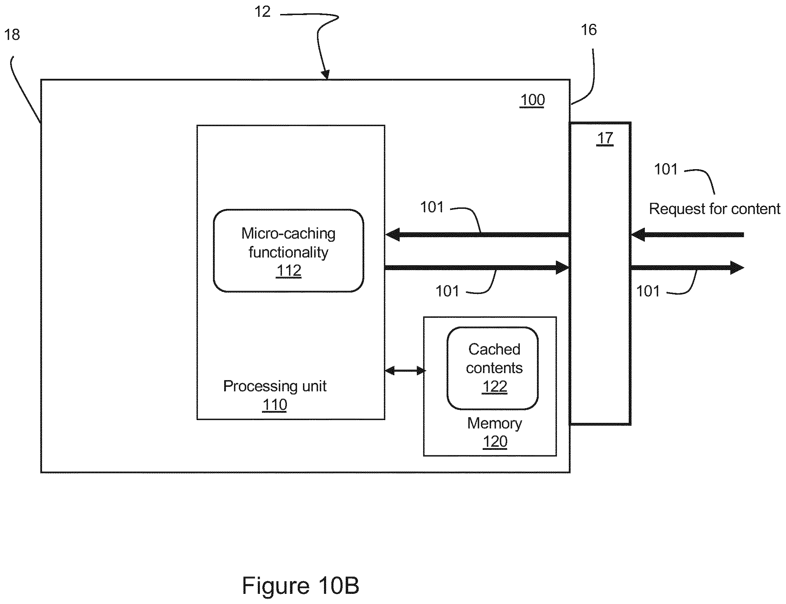

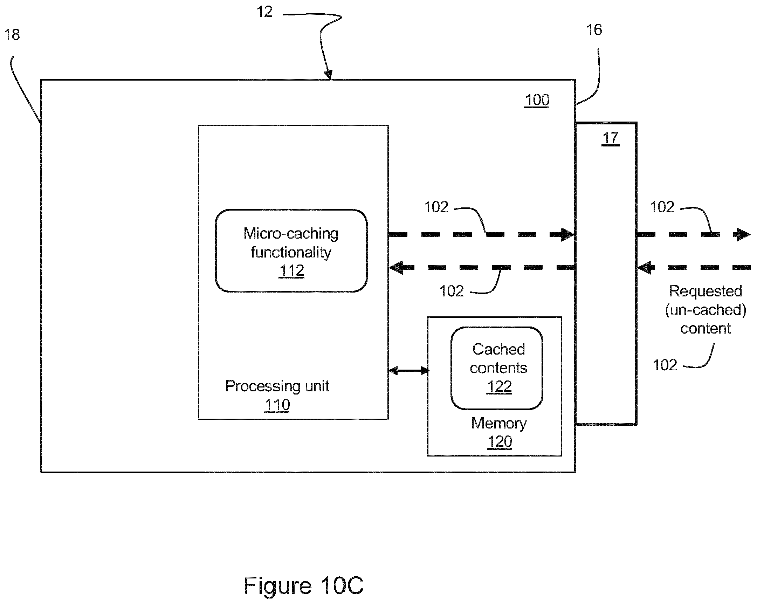

Figures 10A, 10B and 10C illustrate another implementation of the SFP unit 100 with only the rear connector 17 and no front connector. The data received and transmitted by the SFP unit 100, when performing the method 500, are exchanged via the rear connector 17 only.

The method 500 comprises the step 505 of storing the cached contents 122 in the memory 120 of the SFP unit 100. Step 505 is performed by the micro-caching functionality 112 executed by the processing unit 110 of the SFP unit 100. This step will be detailed later in the description, to provide exemplary events / conditions which trigger the caching of a given content.

The method 500 comprises the step 510 of receiving a request for a content 101 via a connector of the SFP unit 100. Step 510 is performed by the micro-caching functionality 112 executed by the processing unit 110 of the SFP unit 100. The request for a content 101 is transmitted by a receiver 400 illustrated in Figure 7 (and not represented in Figures 8A to 10C for simplification purposes).

The connector receiving the content request 101 may vary. Figures 8A and 8B illustrate an exemplary implementation where the content request 101 is received by the front connector 20 of the SFP unit 100. Figures 9A, 9B, 10A and 10B illustrate another exemplary implementation where the content request 101 is received by the rear connector 17 of the SFP unit 100.

The method 500 comprises the step 515 of determining if the content requested at step 510 belongs to the cached contents 122 stored in the memory 120. Step 515 is performed by the micro-caching functionality 112 executed by the processing unit 110 of the SFP unit 100.

The content request 101 received at step 510 comprises a content identifier of the requested content. For example, the content request 101 is a Hypertext Transfer Protocol (HTTP) or HTTP Secure (HTTPS) request, and the content identifier is the Uniform Resource Locator (URL) of the requested content. In another example, the content request 101 is a subscription to a multicast group and the content identifier is the multicast group address. These two examples are for illustration purposes only, and are not intended to limit the scope of the present disclosure.

The cached contents 122 consist of a plurality of contents stored in the memory 120, each one of the plurality of cached contents having a content identifier.

At step 515, a comparison is made between the content identifier of the requested content of the content request 101 and the content identifiers of the plurality of cached contents stored in the memory 120, to determine if there is a match. A list of the content identifiers associated to the plurality of cached contents 122 may be generated and stored in the memory 120, to facilitate the comparison.

The method 500 comprises the step 520 of retrieving the requested content 102 from the memory 120, and transmitting the requested content 102 via a connector of the SFP unit 100. Step 520 is performed if the determination at step 515 is positive. Step 520 is performed by the micro-caching functionality 112 executed by the processing unit 110 of the SFP unit 100. The requested (cached) content 102 is transmitted to the receiver 400 illustrated in Figure 7 (and not represented in Figures 8A to 10C for simplification purposes).

The connector transmitting the requested content 102 may vary. For instance, the connector transmitting the requested content 102 is not the same as the connector receiving the content request 101. Alternatively, the connector transmitting the requested content 102 is the same as the connector receiving the content request 101. Figure 8A illustrates an exemplary implementation where the requested (cached) content 102 is transmitted by the front connector 20 of the SFP unit 100. Figures 9A and 10A illustrate another exemplary implementation where the requested (cached) content 102 is transmitted by the rear connector 17 of the SFP unit 100.

The method 500 comprises the step 525 of forwarding the content request 101 via a connector of the SFP unit 100. Step 525 is performed if the determination at step 515 is negative. Step 525 is performed by the micro-caching functionality 112 executed by the processing unit 110 of the SFP unit 100. The content request 101 is forwarded to the source (of the content) 410 illustrated in Figure 7 (and not represented in Figures 8A to 10C for simplification purposes).

The connector forwarding the content request 101 may vary. For instance, the connector forwarding the content request 101 is not the same as the connector receiving the content request 101. Alternatively, the connector forwarding the content request 101 is the same as the connector receiving the content request 101. Figure 9B illustrates an exemplary implementation where the content request 101 is forwarded by the front connector 20 of the SFP unit 100. Figures 8B and 10B illustrate another exemplary implementation where the content request 101 is forwarded by the rear connector 17 of the SFP unit 100.

The method 500 comprises the optional step 530 of receiving and forwarding the requested content 102 via connector(s) of the SFP unit 100. Step 530 is performed after step 525 and occurs if the determination at step 515 was negative. Step 530 is performed by the micro-caching functionality 112 executed by the processing unit 110 of the SFP unit 100.

If step 530 is executed, the requested content 102 is received (by the SFP unit 100) from the source 410 and forwarded (by the SFP unit 100) to the receiver 400 illustrated in Figure 7 (and not represented in Figures 8A to 10C for simplification purposes). Alternatively, the requested content 102 transmitted from the source 410 to the receiver 400 illustrated in Figure 7 does not go through the SFP unit 100, and step 530 is not performed.

As mentioned previously, the connector(s) receiving and forwarding the requested content 102 may vary. Figure 8B illustrates an exemplary implementation where the requested (un-cached) content 102 is received by the rear connector 17 of the SFP unit 100 and forwarded by the front connector 20. Figure 9B illustrates another exemplary implementation where the requested (un-cached) content 102 is received by the front connector 20 of the SFP unit 100 and forwarded by the rear connector 17. Figure 10C illustrates still another exemplary implementation where the requested (un-cached) content 102 is received by the rear connector 17 of the SFP unit 100 and forwarded by the rear connector 17.

The sequence of steps 510-515-520 or steps 510-515-520 (and optionally 525) is repeated each time a new request for a content 101 is received at step 510.

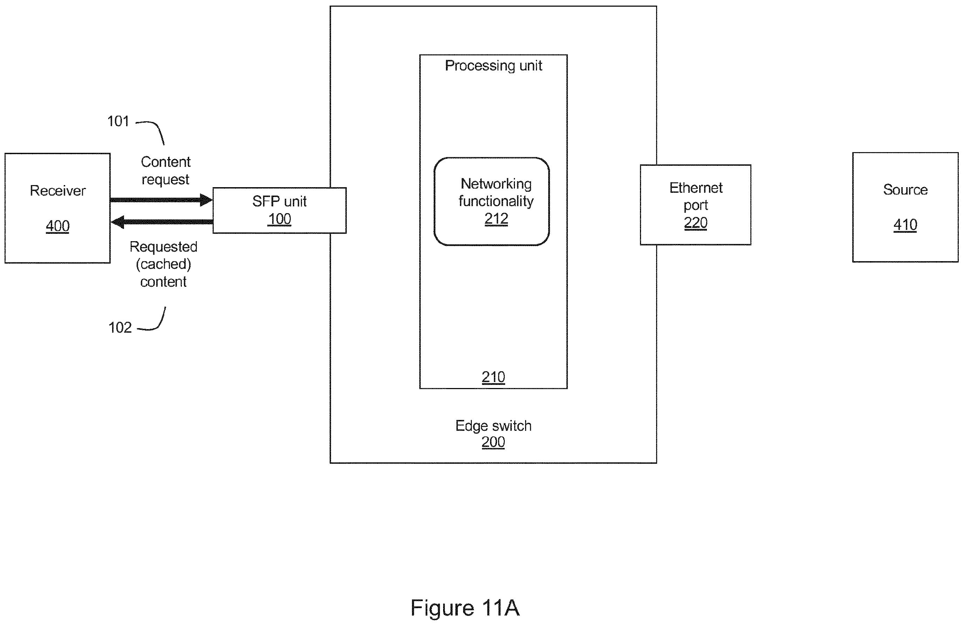

Reference is now made more particularly to Figures 11A, 11B, 12A, 12B, 13A, 13B and 13C representing the SFP unit 100 and a hosting unit 200. The hosting unit 200 may consist of a switch, a router, a gateway, a server, etc.

Although not represented in the Figures for simplification purposes, the hosting unit 200 comprises at least one port adapted for receiving SFP units. In the rest of the description, a port adapted to receive an SFP unit will be referred to as an SFP port. The SFP unit 100 is inserted into one of the SFP port(s) of the hosting unit 200. The hosting unit 200 may comprise additional communication interfaces 220 not adapted for receiving SFP units 100 (e.g. Ethernet port 220).

For illustration purposes, the hosting unit 200 illustrated in Figures 11A-13C is the edge switch represented in Figure 7. The edge switch 200 comprises a processing unit 210 implementing the networking functionality 212 (e.g. switching and / or routing). The processing unit 210 receives data packets through various networking interfaces of the edge switch 200, and the networking functionality 212 processes the received data packets to forward these data packets through one of the interfaces of the hosting unit 200, as is well known in the art. Although the edge switch 200 has been represented with the networking functionality 212 only in the Figures, other types of functionalities may be implemented (alternatively to or in addition to the networking functionality 212) by the edge switch 200 for processing data packets received by the edge switch 200.

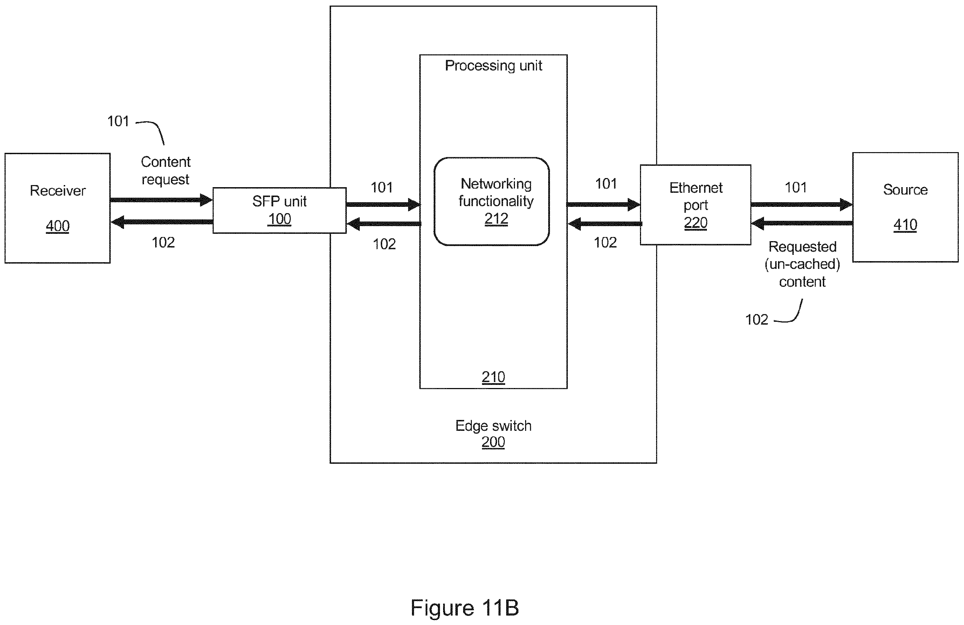

Reference is now made more particularly to Figures 11A and 11B, along with Figures 8A and 8B. Figures 11A and 11B correspond to the implementation of the SFP unit 100 illustrated in Figures 8A and 8B (the SFP unit 100 has at least one front connector 20). The receiver 400 sends the content request 101, which is received by the SFP unit 100 via the front connector 20 of the SFP unit 100.

If the requested content is cached by the SFP unit 100 (Figure 11A), the micro-caching functionality 112 of the SFP unit 100 transmits the requested (cached) content 102 to the receiver 400 via the front connector 20 of the SFP unit 100.

If the requested content is not cached by the SFP unit 100 (Figure 11B), the micro-caching functionality 112 of the SFP unit 100 forwards the content request 101 to the networking functionality 212 of the edge switch 200 via the rear connector 17 of the SFP unit 100. The networking functionality 212 of the edge switch 200 forwards the content request 101 to the source 410 via the Ethernet port 220 of the edge switch 200. The source 410 sends the requested (un-cached) content 102, which is received by the edge switch 200 via the Ethernet port 220. The networking functionality 212 of the edge switch 200 forwards the requested (un-cached) content 102 to the SFP unit 100 via the rear connector 17 of the SFP unit 100. The micro-caching functionality 112 may determine if a condition is fulfilled, to start caching the requested (un-cached) content in the memory 120, as will be detailed later in the description. The micro-caching functionality 112 of the SFP unit 100 forwards the requested (un-cached) content 102 to the receiver 400 via the front connector 20 of the SFP unit. In an already mentioned alternative implementation not represented in the Figures (when step 530 of the method 500 is not executed), the requested (un-cached) content 102 transmitted from the source 410 to the receiver 400 does not transit through the SFP unit 100.

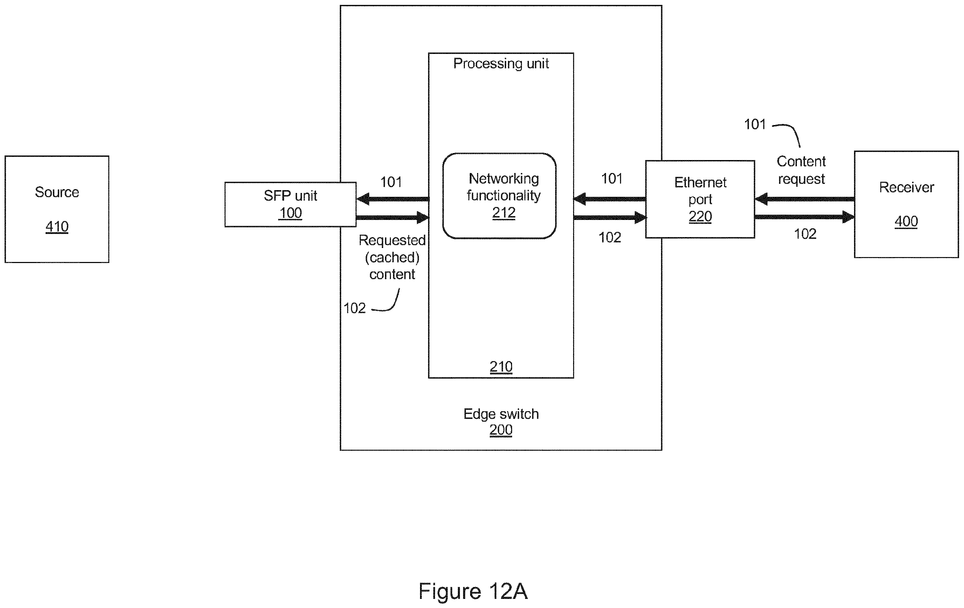

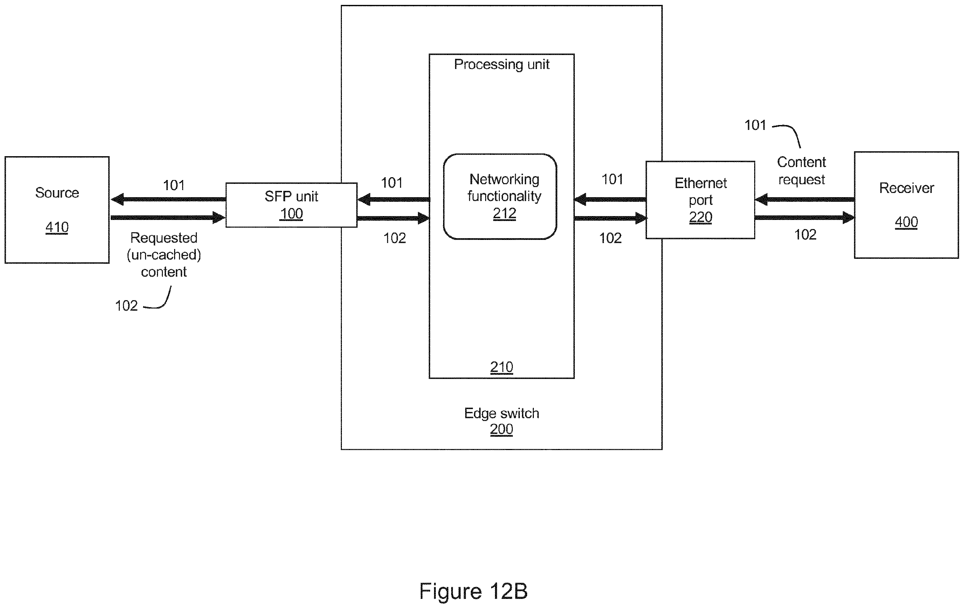

Reference is now made more particularly to Figures 12A and 12B, along with Figures 9A and 9B. Figures 12A and 12B correspond to the implementation of the SFP unit 100 illustrated in Figures 9A and 9B (the SFP unit 100 has at least one front connector 20). The receiver 400 sends the content request 101, which is received by the edge switch 200 via the Ethernet port 220. The networking functionality 212 of the edge switch 200 forwards the content request 101 to the SFP unit 100 via the rear connector 17 of the SFP unit 100.

If the requested content is cached by the SFP unit 100 (Figure 12A), the micro-caching functionality 112 of the SFP unit 100 transmits the requested (cached) content 102 to the networking functionality 212 of the edge switch 200 via the rear connector 17 of the SFP unit 100. The networking functionality 212 of the edge switch 200 forwards the requested (cached) content 102 to the receiver 400 via the Ethernet port 220 of the edge switch 200.

If the requested content is not cached by the SFP unit 100 (Figure 12B), the micro-caching functionality 112 of the SFP unit 100 forwards the content request 101 to the source 410 via the front connector 20 of the SFP unit 100. The source 410 sends the requested (un-cached) content 102, which is received by the SFP unit 100 via the front connector 20 of the SFP unit 100. The micro-caching functionality 112 may determine if a condition is fulfilled, to start caching the requested (un-cached) content in the memory 120, as will be detailed later in the description. The micro-caching functionality 112 of the SFP unit 100 forwards the requested (un-cached) content 102 to the networking functionality 212 of the edge switch 200 via the rear connector 17 of the SFP unit 100. The networking functionality 212 of the edge switch 200 forwards the requested (un-cached) content 102 to the receiver 400 via the Ethernet port 220 of the edge switch 200. In an already mentioned alternative implementation not represented in the Figures (when step 530 of the method 500 is not executed), the requested (un-cached) content 102 transmitted from the source 410 to the receiver 400 does not transit through the SFP unit 100.

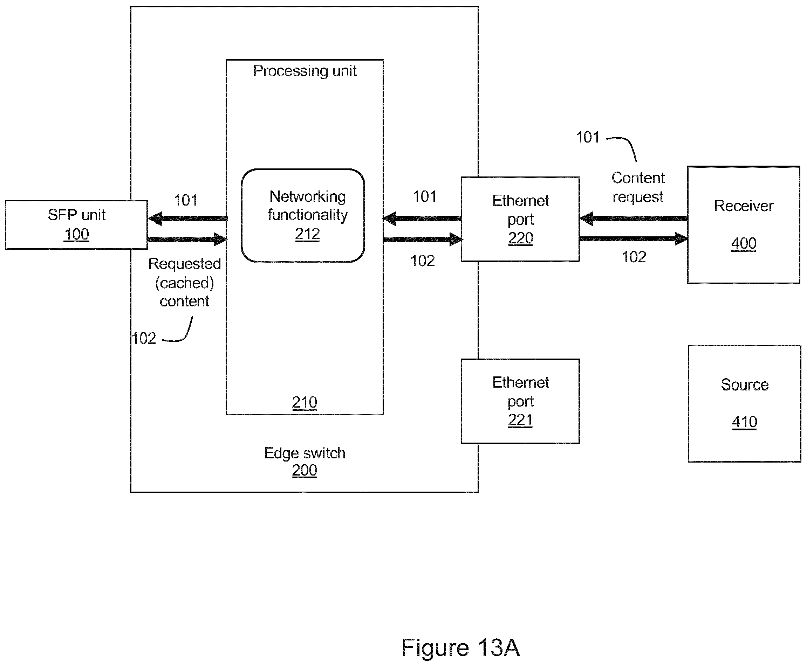

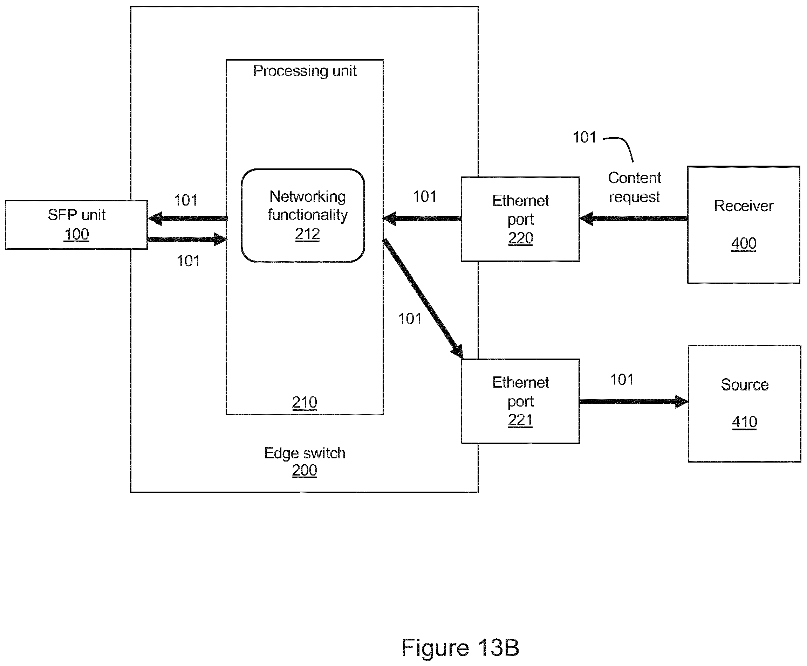

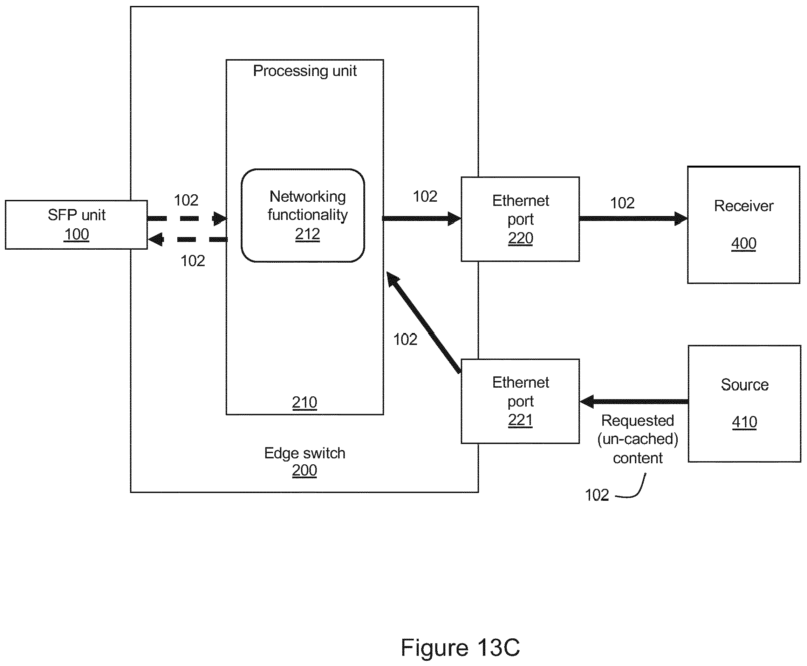

Reference is now made more particularly to Figures 13A, 13B and 13C, along with Figures 10A, 10 and 10C. Figures 13A, 13B and 13C correspond to the implementation of the SFP unit 100 illustrated in Figures 10A, 10B and 10C (the SFP unit 100 has not front connector). The receiver 400 sends the content request 101, which is received by the edge switch 200 via the Ethernet port 220. The networking functionality 212 of the edge switch 200 forwards the content request 101 to the SFP unit 100 via the rear connector 17 of the SFP unit 100.

If the requested content is cached by the SFP unit 100 (Figure 13A), the micro-caching functionality 112 of the SFP unit 100 transmits the requested (cached) content 102 to the networking functionality 212 of the edge switch 200 via the rear connector 17 of the SFP unit 100. The networking functionality 212 of the edge switch 200 forwards the requested (cached) content 102 to the receiver 400 via the Ethernet port 220 of the edge switch 200.

If the requested content is not cached by the SFP unit 100 (Figure 13B), the micro-caching functionality 112 of the SFP unit 100 re-forwards the content request 101 to the networking functionality 212 of the edge switch 200 via the rear connector 17 of the SFP unit 100. The networking functionality 212 of the edge switch 200 re-forward the content request 101 to the source 410 via another Ethernet port 221 of the edge switch 200 (alternatively, the same Ethernet port 220 may be used).

The source 410 sends the requested (un-cached) content 102 (Figure 13C), which is received by the networking functionality 212 of the edge switch 200 via the Ethernet port 221 of the edge switch 200. In a first implementation, the networking functionality 212 of the edge switch 200 forwards the requested (un-cached) content 102 to the micro-caching functionality 112 of the SFP unit 100 via the rear connector 17 of the SFP unit 100. The micro-caching functionality 112 may determine if a condition is fulfilled, to start caching the requested (un-cached) content in the memory 120, as will be detailed later in the description. The micro-caching functionality 112 of the SFP unit 100 re-forwards the requested (un-cached) content 102 to the networking functionality 212 of the edge switch 200 via the rear connector 17 of the SFP unit 100. The networking functionality 212 of the edge switch 200 forwards the requested (un-cached) content 102 to the receiver 400 via the Ethernet port 220 of the edge switch 200. In a second implementation (when step 530 of the method 500 is not executed), the requested (un-cached) content 102 transmitted from the source 410 to the receiver 400 does not transit through the SFP unit 100. The requested (un-cached) content 102 is directly forwarded by the networking functionality 212 of the edge switch 200 to the receiver 400 via the Ethernet port 220 of the edge switch 200, after reception via the Ethernet port 221 of the edge switch 200.

Reference is now made back more particularly to Figures 14A and 14B, along with Figures 8A-10C. The steps represented in Figure 14B aim at controlling the cached contents 122 stored in the memory 120 of the SFP unit 100. The steps represented in Figure 14B are executed independently of the steps represented in Figure 14A. Alternatively or complementarily, the steps represented in Figure 14B are executed after one of the steps (e.g. 520) represented in Figure 14A.

The method 500 comprises the step 535 of determining if at least some of the cached contents 122 stored in the memory 120 shall no longer be cached. Step 535 is performed by the micro-caching functionality 112 executed by the processing unit 110 of the SFP unit 100.

The method 500 comprises the step 540 of deleting the one or more cached content 122 determined at step 535 from the memory 120. Step 540 is performed if the determination at step 535 is positive. Step 540 is performed by the micro-caching functionality 112 executed by the processing unit 110 of the SFP unit 100. If the determination at step 535 is negative, no action is taken.

The determination made at step 535 is based on one or more event or condition. If the one or more event or condition is fulfilled, then the determination is positive. Otherwise, the determination is negative.

The one or more event or condition may vary and is implementation dependent. Following are examples of events or conditions, which are for illustration purposes only, and are not intended to limit the scope of the present disclosure.

For a given cached content among the cached contents 122 stored in the memory 120, a metric related to transmissions at step 520 of the given cached content by the SFP unit 100 is determined. If the metric reaches a threshold, the determination at step 535 is positive. Otherwise, the determination is negative. The metric is updated each time step 520 is performed. For example, the metric is the number of transmissions of the given cached content (number of executions of step 520 for the given cached content) over a period of time. If the number of transmissions over the period of time is bellow a threshold (e.g. 1000 transmissions of the given cached content per minute), then the determination is positive. This metric is representative of the given cached content no longer being in high demand, and it is therefore no longer needed to cache this given cached content.

The threshold may vary from one cached content to another, for instance based on the type of the cached content (e.g. video versus web pages, etc.), the size of the cached content, etc.

Steps 535-540 are repeated regularly, to constantly check if the memory 120 shall be freed from some of the cached contents 122. For example, a timer is set for regularly checking (e.g. every second).

Alternatively or complementarily, the deletion of one or more cached content 122 from the memory 120 is based on the reception by the SFP unit 100 of a command from a third party, the command identifying one or more cached content 122 to be deleted. This implementation is not represented in the Figures for simplification purposes.

Alternatively or complementarily, the determination that a given cached content stored in the memory shall no longer be cached is based on a determination that a duration of the storage of the given cached content in the memory 120 is greater than a given value or a determination that a given time limit is reached.

For example, a first cached content is stored for two hours in the memory 120 (and then erased from the memory 120), and a second cached content is stored for three hours in the memory 120 (and then erased from the memory 120). A third cached content is stored in the memory 120 until 6 pm (and then erased from the memory 120), and a fourth cached content is stored in the memory 120 until 8 pm (and then erased from the memory 120). For illustration purposes, if the storage of the four cached contents in the memory 120 started at 3 pm, the first content is erased at 5pm, the second cached content is erased at 6 pm, the third cached content is erased at 6 pm, and the fourth cached content is erased at 8 pm.

The duration or the time limit for a given cached content can be received via a command, as will be illustrated later in the description.

Reference is now made back more particularly to Figures 14A and 14C, along with Figures 8A-10C. The steps represented in Figure 14C also aim at controlling the cached contents 122 stored in the memory 120 of the SFP unit 100. The steps represented in Figure 14C are executed independently of the steps represented in Figures 14A and 14B. Alternatively or complementarily, the steps represented in Figure 14C are executed after one of the steps (e.g. 525 or 530) represented in Figure 14A.

The method 500 comprises the step 545 of determining if a given content shall be cached. Step 545 is performed by the micro-caching functionality 112 executed by the processing unit 110 of the SFP unit 100. Step 545 is performed only if the given content does not already belong to the cached contents 122 stored in the memory 120.

The method 500 comprises the step 550 of storing the given content in the memory 120. Step 550 is performed if the determination at step 545 is positive. The given content becomes part of the cached contents 122 stored in the memory 120. Step 550 is performed by the micro-caching functionality 112 executed by the processing unit 110 of the SFP unit 100. If the determination at step 545 is negative, no action is taken.

The determination made at step 545 is based on one or more event or condition. If the one or more event or condition is fulfilled, then the determination is positive. Otherwise, the determination is negative.

The one or more event or condition may vary and is implementation dependent. Following are examples of events or conditions, which are for illustration purposes only, and are not intended to limit the scope of the present disclosure.

For a given requested content, each time step 525 is performed for the requested content, a metric related to the forwarding at step 525 of the request 101 for the requested content by the SFP unit 100 is determined. If the metric reaches a threshold, the determination at step 545 is positive. Otherwise, the determination is negative. The metric is updated each time step 525 is performed. For example, the metric is the number of forwards of the request 101 for the requested content (number of executions of step 525 for the requested content) over a period of time. If the number of forwards over the period of time is above a threshold (e.g. 1500 forwards per minute), then the determination is positive. This metric is representative of the requested content being in high demand, and it is therefore more efficient to cache this requested content.

The threshold may vary from one requested content to another, for instance based on the type of the requested content (e.g. video versus web pages, etc.), the size of the requested content, etc.

If step 530 is performed, the requested content is stored in the memory 120 during or after the execution of step 530. If step 530 is not performed, the micro-caching functionality 112 sends a request for the requested content on behalf of the SFP unit 100 and stores the requested content in the memory 120 upon reception of a response to the request comprising the requested content (this implementation is not represented in the Figures for simplification purposes).

Alternatively or complementarily, the caching of a given content in the memory 120 is based on the reception by the SPP unit 100 of a command from a third party, the command comprising the given content to be cached in the memory 120. Alternatively, the received command comprises an identification of the content to be cached, instead of the content to be cached itself. In this case, next time the SPP unit 100 receives content corresponding to the identification of the content to be cached, the received content is cached. This implementation is not represented in the Figures for simplification purposes.

As mentioned previously, the command may further include a duration of the storage of the given content in the memory 120 or a time limit for storing the given content in the memory 120.

For example, a first command comprises a first content with a duration of 2 hours. A second command comprises a second content with a time limit set to 6 pm. For illustration purposes, if the two commands are received at 3 pm, the first content is stored from 3 pm to 5 pm and the second content is stored from 3 pm to 6 pm.

A neural network executed by the processing unit 110 may also be used to determine the duration or time limit based on characteristics of the contents. During a training phase, the neural network is trained with inputs consisting of characteristics of the contents and outputs consisting of the corresponding duration or time limit. During an operational phase, the neural network infers the duration or time limit for a given content based on the characteristics of the given content. Examples of characteristics for a video content include duration of the video content, type of the video content (e.g. movie, news, sports, etc.), timing of the video content (e.g. live event, replay event, on demand content, etc.), etc.

The present disclosure is not limited to SFP units or standardized hot-pluggable transceiving units comprising a housing with standardized dimensions. The present disclosure also applies to any transceiving unit 100 adapted to being inserted into a corresponding port of a hosting unit 200. The only constraint is that the transceiving unit 100 and the corresponding insertion port of the hosting unit 200 have compatible characteristics (e.g. in terms of shape, electrical interfaces, etc.). The previously described implementation of the method 500 by the SFP unit 100 applies to any transceiving unit 100.

Although the present disclosure has been described hereinabove by way of non-restrictive, illustrative embodiments thereof, these embodiments may be modified at will within the scope of the appended claims without departing from the spirit and nature of the present disclosure.

## Claims

1. A transceiving unit comprising:
a housing adapted to being inserted into a chassis of a hosting unit;
memory in the housing for storing cached contents;
at least one connector;
a processing unit in the housing for:
receiving a request for a content via the at least one connector;
determining if the requested content belongs to the cached contents stored in the memory;
if the determination is positive, retrieving the requested content from the memory and transmitting the requested content via the at least one connector;
if the determination is negative, forwarding the request for the content via the at least one connector; and
determining that at least some of the cached contents stored in the memory shall no longer be cached and deleting the at least some of the cached contents from the memory.

2. The transceiving unit of claim 1, wherein the transceiving unit is a standardized hot-pluggable transceiving unit and the housing has standardized dimensions.

3. The transceiving unit of claim 1, wherein the at least one connector consists of a rear connector located on a back panel of the housing and at least one front connector located on a front panel of the housing, or the rear connector only.

4. The transceiving unit of claim 1, wherein if the determination that the requested content belongs to the cached contents stored in the memory is negative, the processing unit further receives the requested content and forwards the requested content via the at least one connector.

5. The transceiving unit of claim 1, wherein the determination that a given cached content stored in the memory shall no longer be cached is based on a metric related to transmissions of the given cached content by the transceiving unit.

6. The transceiving unit of claim 5, wherein the metric is a number of transmissions of the given cached content over a period of time and the determination is positive if the metric is below a threshold.

7. The transceiving unit of claim 1, wherein the determination that a given cached content stored in the memory shall no longer be cached is based on a reception of a command by the transceiving unit, the command identifying the given cached content to be deleted.

8. The transceiving unit of claim 1, wherein the determination that a given cached content stored in the memory shall no longer be cached is based on a determination by the processing unit that a duration of the storage of the cached content in the memory is greater than a given value or a determination by the processing unit that a given time limit is reached.

9. The transceiving unit of claim 1, wherein a determination is made by the processing unit that a given content shall be cached in the memory based on a reception of a command by the transceiving unit, the command comprising the given content to be cached or an identification of the given content to be cached.

10. The transceiving unit of claim 9, wherein the command further comprises a duration or a time limit for storing the given content in the memory.

11. A method for implementing a micro-caching functionality by a transceiving unit, the transceiving unit comprising a housing adapted to being inserted into a chassis of a hosting unit, the method comprising:
storing cached contents in memory of a transceiving unit;
receiving by a processing unit of the transceiving unit a request for a content via a connector of the transceiving unit;
determining by the processing unit if the requested content belongs to the cached contents stored in the memory;
if the determination is positive, retrieving by the processing unit the requested content from the memory and transmitting by the processing unit the requested content via the connector or another connector of the transceiving unit;
if the determination is negative, forwarding by the processing unit the request for the content via the connector or another connector of the transceiving unit; and
determining by the processing unit that at least some of the cached contents stored in the memory shall no longer be cached and deleting by the processing unit the at least some of the cached contents from the memory.

12. The method of claim 11, wherein the transceiving unit is a standardized hot-pluggable transceiving unit and the housing has standardized dimensions.

13. The method of claim 11, wherein the transceiving unit comprises a rear connector located on a back panel of the housing and at least one front connector located on a front panel of the housing, or the transceiving unit comprises the rear connector only.

14. The method of claim 11, wherein if the determination that the requested content belongs to the cached contents stored in the memory is negative, the processing unit further receives the requested content and forwards the requested content via the connector or another connector of the transceiving unit.

15. The method of claim 11, wherein the determination that a given cached content stored in the memory shall no longer be cached is based on a metric related to transmissions of the given cached content by the transceiving unit.

16. The method of claim 15, wherein the metric is a number of transmissions of the given cached content over a period of time and the determination is positive if the metric is below a threshold.

17. The method of claim 11, wherein the determination that a given cached content stored in the memory shall no longer be cached is based on a reception of a command by the transceiving unit, the command identifying the given cached content to be deleted.

18. The method of claim 11, wherein the determination that a given cached content stored in the memory shall no longer be cached is based on a determination by the processing unit that a duration of the storage of the cached content in the memory is greater than a given value or a determination by the processing unit that a given time limit is reached.

19. The method of claim 11, wherein a determination is made by the processing unit that a given content shall be cached in the memory based on a reception of a command by the transceiving unit, the command comprising the given content to be cached or an identification of the given content to be cached.

20. A non-transitory computer program product comprising instructions executable by a processing unit of a transceiving unit, the transceiving unit comprising a housing adapted to being inserted into a chassis of a hosting unit, the execution of the instructions by the processing unit of the transceiving unit providing for implementing a micro-caching functionality by:
storing cached contents in memory of a transceiving unit;
receiving by the processing unit of the transceiving unit a request for a content via a connector of the transceiving unit;
determining by the processing unit if the requested content belongs to the cached contents stored in the memory;
if the determination is positive, retrieving by the processing unit the requested content from the memory and transmitting by the processing unit the requested content via the connector or another connector of the transceiving unit;
if the determination is negative, forwarding by the processing unit the request for the content via the connector or another connector of the transceiving unit; and
determining by the processing unit that at least some of the cached contents stored in the memory shall no longer be cached and deleting by the processing unit the at least some of the cached contents from the memory.
